# EUROPEAN PATENT SPECIFICATION

(11) **EP 2 749 758 B1**
(45) Date of publication and mention of the grant of the patent: **16.10.2019**
(21) Application number: 12199696.1
(22) Date of filing: 28.12.2012
(51) Int. Cl.: F02D 41/00, F01N 3/20, F02D 41/02, F02D 21/08, F02D 23/02, F01N 5/04, F01N 13/10, F02B 33/32, F02B 37/22, F02B 39/10, F02M 26/10, F02M 26/05, F02M 26/23, F02M 26/43, F02M 26/47, F02D 41/38, F02D 41/40

(54) **Method and apparatus for controlling EGR and an SCR catalyst depending on the unit cost of fuel and additive.**
Verfahren und Vorrichtung zum Steuern eines AGR-Systems und eines SCR-Katalysators abhängig von der Kosten des Kraftstoffs und des Zusatzes
Procédé et appareil pour contrôler un système d'EGR et un catalyseur SCR en function du coût de carburant et d'additif

(43) Date of publication of application: 02.07.2014
(73) Proprietor: FPT Industrial S.p.A., 10156 Torino (IT)
(72) Inventor: D'Epiro, Clino, 10091 ALPIGNANO (IT)
(74) Representative: Franzolin, Luigi

(56) References cited:
- EP-A1- 1 653 058
- US-A1- 2006 184 307
- US-A1- 2007 163 244

## Description

### Application field of the invention

The present invention relates to the field of system for the exhaust gas recirculation, and in particular to an exhaust gas recirculation system EGR in a supercharged engine equipped with an exhaust gas after-treatment system (ATS) .

### Description of the prior art

Due to the regulations imposing emission limits, the majority of the manufacturers has introduced and improved the EGR technique.

Recently, however, when new and stricter limits have been imposed, all the manufacturers were forced to implement also a device for reducing NOx, called SCR. It is a chemical reactor which uses a reducing agent. According to the new regulations, while the EGR technique alone cannot adequately reduce the production of NOx, the SCR may fully replace the EGR technique.

Anyway, the presence of two systems that act at the same time on the same regulated pollutant introduces new problems, above all related to fuel consumption.

Being a chemical catalyst, the SCR needs to reach a predetermined temperature threshold to guarantee a determined efficiency.

To reach such threshold as soon as possible, which in general is about 250°C, different techniques are known which result in an additional fuel consumption.

One of these, for example, provides post-injections of fuel, another provides a choking of the exhaust, so that the engine point is artificially varied with an increase of fuel consumption.

It has been observed that, in determined operating conditions concurrent with determined environmental conditions, the efficiency temperature threshold of the SCR is never reached, or it is reached with a huge fuel consumption and with corresponding huge emissions of unburned hydrocarbons.

In addition to such problems, the aqueous urea solution injected upstream of the SCR tends to crystallize and to settle on the walls of the exhaust gas pipe until the temperature of the pipe is low.

For such problem, according to the technique known in the art the pipe is artificially warmed, or the urea injection is inhibited, nullifying the efficiency of the SCR.

Due to the unsteady efficiency of the SCR, the technique known in the art provides a continuous exhaust gas recirculation, even though in an adjustable way, with a minimum rate of 20% of the overall air mass entering the engine.

When the SCR is completely efficient, however, the system is inefficient as a whole, due to the negative pumping work of the engine, that is always present because of the exhaust gas recirculation.

Also when the EGR scroll is of the variable geometry type, it is smaller than the other, in order to avoid that, in certain engine operating conditions, the respective distributor has to be too closed to determine the necessary counterpressure, which results in too much energy transferred to the turbine, already activated by the second fixed-distributor scroll and thus to avoid opening the waste-gate valve too early, loosing useful energy. As a consequence, the negative pumping work is always performed and is performed by all of the engine cylinders.

With such premises, any regulation relating to the aqueous additive consumption, injected in the ATS upstream of the SCR, is fixed and dependent only on the engine point.

US2007163244 discloses a method that determines the cost of operating a combustion engine and the cost of operating an emissions after-treatment device in order to minimize the overall costs.

US2006184307 disclose a travel assist system searching a nearest service station based on navigation information and predicts a quantity of aqueous urea solution consumed until the service station is reached.

### Summary of the invention

Therefore the aim of the present invention is to overcome all the aforementioned drawbacks to provide an EGR recirculation system such that the fuel consumption and the emissions are optimized, respecting the emission limits, regardless of the operating conditions of the SCR and of the environmental atmospheric conditions.

Another aim of the present invention, is to reduce the negative pumping work when the SCR is completely efficient. In the following, the full efficiency of the SCR refers to a respective efficiency exceeding 95% with respect to a nominal value.

According to the present invention, when the SCR is completely efficient, the exhaust gas recirculation mappings and the aqueous, generally urea-based, additive flow rate, are calculated by means of a minimization of a cost function based on the unit costs of the additive and of the fuel.

According to the present invention, the exhaust gas recirculation mappings and the aqueous additive flow rate, are calculated to maximize a function of the distance that can be covered by the vehicle, based on the residual quantities of fuel and additive in the respective tanks. To this end it may be useful to build an equation according to a Linear Programming method, or according to the Simplex method, or according to other methods, such as the Fourier methods.

Thus it is possible to extend the distance that can be covered by the vehicle up to next filling up of the fuel or of the additive tank.

Thus, while in a first phase, namely when the SCR is not fully efficient, the EGR can be regulated in order to reduce the emission of pollutant, subsequently, when the SCR is completely efficient, the EGR can be regulated in order to minimize the maintenance costs of the vehicle or in order to maximize the distance that the vehicle can still cover, on the basis of the amount of fuel and additive stored in their respective tanks.

According to another aspect of the present invention, preferably when the residual quantity of fuel and/or the residual quantity of additive are below a predetermined percentage, instead of minimizing the maintenance costs, the remaining distance that the vehicle can cover is maximized, thus the cost function is based on the distance to be covered, and not on the residual costs.

Secondly, such SCR efficiency depends on the ageing of the catalyst itself. Thus, as the SCR ages and its maximum efficiency decreases, the ECU can regulate the EGR flow rate in order to compensate such decay by means of the EGR, reducing the production of NOx "in cylinder" and ensuring the reduction of pollutant emissions over time.

In order to realize what said above, the negative pumping work to create the necessary counterpressure that is functional to the exhaust gas recirculation, have to be completely adjustable in a very large interval of recirculated gas percentages, namely from 1-2% to 45%.

This is because the EGR regulation is no longer only a function of the engine point, but also of the fuel and additive costs and of the SCR efficiency.

All this have to be realized without having any impact on the boost, namely on the supercharging of the engine itself, which is strictly connected to the counterpressure realized at the exhaust.

According to a preferred alternative embodiment of the invention, a twin-scroll turbine is used, wherein each one of the scrolls is of the variable geometry type, and can be actuated independently of one another.

According to a preferred alternative embodiment of the invention, the respective effusion static sections of both scrolls are preferably dimensioned as if the engine was of the type without EGR.

According to a further aspect of the present invention, the mass of the exhaust gas recirculated by the EGR scroll being the same, the turbine tends to accelerate or to slow down according to the amount of residual gas flow passing through the EGR scroll: this depends on the engine operating point. According to the present invention, the behaviour of the turbine is controlled by means of the second variable geometry scroll, namely the non-EGR scroll. According to a preferred alternative embodiment of the invention, the EGR scroll has a respective static section whose effusion is equal to the second non-EGR scroll. Thus, one can be of the sliding wall type and the other of the sliding vane type.

According to a preferred alternative embodiment of the invention, the two scrolls have identical dimensions and characteristics.

The variable geometry is preferably of the type per se known, generally of the sliding vane or of the sliding wall type.

According to a first aspect of the present invention, a method for regulating the percentage of recirculated gas EGR is provided.

In particular, the means for regulating the internal fluid dynamics of the second scroll are regulated also as a function of the regulation of the EGR scroll, so that the overall energy transferred to the turbine will balance the power absorbed by the supercharger or by an electric generator driven by the turbine.

Advantageously, it is thus possible to avoid bringing the turbine and/or the supercharger at speeds higher than admissible ones, but also to regulate the boost pressure at the exact required value, regardless of the amount of recirculated EGR, without necessarily using dissipative regulation means, such as for example a waste-gate valve.

According to the present invention, it is possible to realize a high number of EGR regulations, from 1-2% to 45%. Furthermore, it is possible to regulate the EGR flow rate also as a function of the advance fuel injection timing, so that a better specific consumption can be obtained, the emissions being the same.

At the same time, or as an alternative, it is possible to vary the quantity of urea-based additive injected upstream of the SCR for the reduction of pollutant emissions.

According to the present invention, the urea flow rate and the recirculated gas flow rate can be regulated also by minimizing a cost function based on the unit prices of the fuel and of the additive.

The object of the present invention is a method for recirculating the exhaust gas in an engine equipped with ATS, in accordance with claim 1.

Another object of the present invention is a supercharged internal combustion engine equipped with ATS implementing the aforementioned method.

A further object of the present invention is a vehicle comprising the aforementioned system.

The claims are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 shows a general scheme of an exhaust gas recirculation system according to the present invention;
figures 2 and 3 show preferred alternative embodiments of a component of the scheme shown in figure 1.

In the figures the same reference numbers and letters identify the same elements or components.

### Detailed description of preferred embodiments of the invention

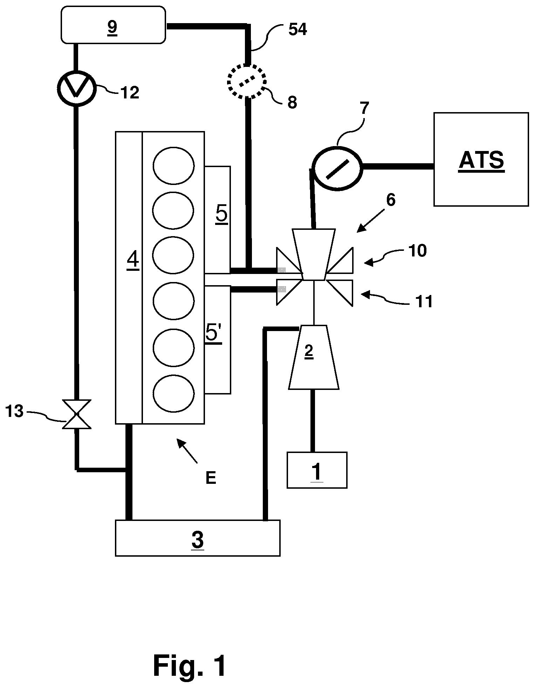

With reference to figure 1, an internal combustion engine E comprises an intake manifold 4 and a pair of exhaust manifolds 5 and 5' each one of them connected to half of the number of cylinders of the engine E. The two exhaust manifolds are distinct and separate from each other.

Each one of the two exhaust manifolds is connected to one of the two scrolls 10, 11 of the turbine 6. Only one of these comprises also a branch 54 for the exhaust gas recirculation EGR. In particular, such branch 54 connects the exhaust manifold 5 to the intake manifold 4.

The turbine 6 is of the twin-scroll type, wherein respective variable geometry distributors are housed.

In particular, the EGR scroll 10 is connected with the exhaust manifold 5, while the other scroll 11 is connected with the exhaust manifold 5'.

The output of the turbine 6 is connected to the exhaust gas after-treatment system ATS.

The turbine may drive the supercharger 2 in rotation by means of a fixed mechanical connection or by means of an electric generator powering an electric motor, which, in its turn, drives the supercharger 2.

Fresh air is sucked by the supercharger 2 through an air filter box 1 and is cooled by means of a cooler 3 before entering the intake manifold 4. Thus, the inlet of the supercharger is connected to the filter box 1 and its outlet is connected to the intake manifold 4 by means of a cooler 3.

According to the alternative embodiment shown in figure 1, also the recirculation branch 54 comprises preferably, from exhaust to intake, its own cooler 9, called EGR cooler, and a check valve 12 and a sensor measuring the recirculated gas mass 13.

Possibly, according to a configuration not shown in the figures, the branch 54 may be connected to the intake manifold upstream of the cooler 3. In such case the EGR cooler 9 may be absent.

According to a preferred alternative embodiment of the present invention, the turbine 6 comprises two scrolls having the same dimensions, suitable to allow the operation of the engine E without any exhaust gas recirculation and without dissipating useless pumping work to the cylinders connected to the exhaust manifold 5, when the exhaust gas recirculation is not necessary. In other words, the EGR scroll 10 is dimensioned and controllable so that, at least in an operating condition, generally at a higher or at the same number of revolutions than/as the maximum torque, it does not generate enough counterpressure for the exhaust gas recirculation. In other words, the pressure at the intake manifold is higher than the pressure at the exhaust manifold. This means that the effusion static section of EGR scroll is dimensioned as if the engine was without EGR. According to the present invention, it is possible to recirculate exhaust gas flow rates comprised between 1-2% and 45%, with the respectively necessary counterpressure. Thus such counterpressure increases proportionately to the gas mass to be recirculated. On the contrary, the variability of the gas flow rate to be recirculated, according to the prior art, is very limited, since the counterpressure is always present, above all in configurations wherein the scrolls have different shapes and effusion static sections.

Although the adoption of the aforementioned twin-scroll turbine, both scrolls having variable geometries, is not necessarily essential, it made it possible to comprise and to actuate the EGR regulation that is a function of
- the SCR efficiency,
- of the advance fuel injection time in the cylinders,
- of the quantity of urea solution injected upstream of the SCR.

Thus, while according to the prior art, due to limited variability of the EGR regulation, once an average exhaust gas flow rate to be recirculated has been chosen, all the other parameters are set during the system design, according to the present invention, the hardware remains the same and the EGR regulation can be continuously varied as a function of the efficiency of the ATS, of the advance fuel injection time, and of the quantity of injected additive.

According to a preferred alternative embodiment of the present invention, when the driver fills up the fuel and/or the additive tank, he/she may be asked to insert the unit cost of the fuel and/or of the additive.

Thus the vehicle control unit ECI, which manages the engine, may privilege a higher fuel consumption, namely a higher exhaust gas recirculation, or a higher additive consumption, in relation to the respective costs, in order to minimize the overall operating costs of the vehicle.

According to a further preferred alternative embodiment of the invention, when the highest possible power is required to the engine, it is possible to increase simultaneously both the recirculated exhaust gas flow rate and the quantity of injected additive, in order to avoid emitting pollutants, while increasing the fuel injection advance, namely the injection timing. The latter being still a function of the efficiency reached by the SCR.

For example, in case the maximum power is required when the SCR is cold, the increase or the simple injection of additive can anyway be inhibited in order to avoid the generation of crystals in the ATS.

It goes without saying that in such circumstances the engine cannot deliver the highest possible power, since an EGR increase determines a power reduction that can be compensated only partially by a variation, namely an advance, of the injection timing.

The control unit of the engine E calculates the efficiency of the SCR:
- according to NOx measures detected upstream and downstream of the SCR and/or
- according to algorithms based on
   o operating parameters of the engine, such as engine point and/or oil temperature and/or cooling water temperature and/or
   o parameters of the SCR itself, such as the temperature upstream and/or downstream of the SCR and/or
   o ambient parameters such as temperature and humidity.

Then the control unit, on the basis of a maximum threshold of NOx emissions, calculates an EGR flow rate to be recirculated and an additive flow rate to be injected in the SCR. Thus the control unit controls the EGR scroll 10 in a consequent way.

Furthermore, the control unit calculates an engine boost pressure and thus regulates the non-EGR scroll 11 in a way that is complementary to the regulation of the scroll 10, in order to provide the necessary energy Ecomp to the supercharger.

According to a further preferred alternative embodiment of the invention, the control unit calculates said EGR flow rate also on the basis of a predetermined injected aqueous solution flow rate and/or to a predetermined injection advance.

Such necessary EGR percentage and/or such additive flow rate can be calculated, for example, by means of a look-up table or by a feedback control.

On the basis of the necessary counterpressure, the equivalent effusion section of the exhaust gas through the EGR scroll is identified. For example, the geometry of the EGR scroll is varied.

An increase of the counterpressure on the EGR branch corresponds to a decrease of the "residual" gas flow rate crossing the scroll of the EGR turbine, but the speed of such residual gas is accelerated against the impeller of the turbine, releasing its kinetic energy on the impeller of the turbine.

The kinetic energy Ecin_Egr transferred to the turbine from said residual flow rate crossing the EGR scroll varies in relation to the operating point of the engine and to the mass of recirculated gas M_Egr, thus Ecin_Egr=f(M_Egr, BMEP, RPM), where BMEP corresponds to the known brake medium effective pressure, and RPM corresponds to the revolutions per minute of the engine.

According to the present invention, the kinetic energy Ecin transferred as a whole to the impeller of the turbine 6 is made independent of such residual flow rate M_Egr and of its respective energy content. This is obtained by regulating independently the second scroll. Thus, the rotation speed of the turbo-supercharger is regulated only on the basis of the overpressure that is necessary to the supercharger for the intake, namely of the energy Ecomp that is necessary to the supercharger 2, making such overpressure independent of the mass of the recirculated gas. Such regulation, in particular, allows to avoid reaching the nominal limit speed of the turbo-supercharger. In other words, Ecin=f(Ecomp).

When the EGR flow rate is high, it is evident that the kinetic energy contribution offered by the turbine of the EGR scroll decreases, but it is compensated by the second scroll 11.

Thus, each scroll is able to transmit more than 50% of the kinetic energy Ecomp that is necessary to activate the turbo-supercharger assembly, when the respective distributors are regulated at the minimum effusion section. This is advantageous also to give a higher acceleration progression to the turbo-supercharger at low speed, with reduced acceleration time of the vehicle. According to the present invention, at high speed, namely at a speed exceeding the revolutions per minute for the maximum torque, the two distributors are regulated in a complementary way, namely one as a function of the EGR and the other as a function of the boost, without exceeding the limits of the design of the turbo-supercharger.

According to another preferred alternative embodiment of the invention, for a speed of rotation lower than the speed required for the maximum torque, both scrolls may be regulated so that the highest possible energy is transferred to the turbine, in order to maximize the boost pressure and with it also the torque and, consequently, the engine's response.

In other words, power is privileged over fuel or urea-based aqueous additive saving.

In this case, the EGR flow rate is a dependent function of the power that is intended to be delivered. Namely the EGR flow rate becomes a function of the engine supercharging and it is no longer an independent variable, as described in the other alternative embodiments.

Thus, when the maximum power is required, the aqueous additive injection is regulated at a maximum saturation level and the exhaust gas recirculation is regulated as a function of an advance value of the fuel injection time in the cylinders, which, in its turn, privileges the maximum power. In other words, both the fuel injection advance and the aqueous additive injection are brought at the highest possible level, in relation to the engine point, and the EGR is regulated as to limit the pollutant emissions within the limits imposed by the regulations, as a function of the SCR efficiency.

In the following it is stated that the active is brought at a maximum saturation point, intending that it is brought at a limit level, exceeding which ammonia is dispersed in the environment.

Only if a fine regulation valve 8 is present on the EGR branch, then it is possible to regulate the EGR flow rate regardless of the supercharging imposed to the engine.

When the fine regulation valve is not present, once the target power is known, the scrolls can be regulated; the recirculated EGR flow rate is calculated and thus the additive flow rate and the injection advance can be calculated, as to insure the respect of the regulations on emissions. It is certainly more advantageous to have also the fine regulation valve 8 of the EGR. Since, when the SCR is completely efficient, it allows to keep the oxygen percentage entering the engine high, with an improved fuel combustion and thus a higher torque delivered by the engine.

It is also to be noted that, according to a preferred alternative embodiment of the invention, along the connection between the exhaust manifold 5 and the inlet of the EGR scroll 10, no further regulation valves or choking elements are present.

The scroll 11 compensates the work of the scroll 10, by providing:
- in some conditions a higher energy to the turbine than the scroll 10 does, since the latter is regulated as a function of the EGR flow rate,
- in other conditions by providing less energy to the turbine 6 than the scroll 10 does, in order to avoid the supercharger to reach its runaway speed rate.

For example, in the condition wherein the turbine 6 is mechanically connected with the supercharger 2, the equivalent effusion section of the scroll 10 defines a minimum speed of rotation of the turbo-supercharger. When the speed of rotation of the supercharger exceeds a predetermined threshold, the scroll 11 is controlled so that it opens its vanes, or its wall, (widening its effusion section) compensating the increased energy transferred to the turbine by crossing the scroll 10.

On the contrary, when the turbine is connected to a generator, then the scroll can be regulated to provide the necessary energy for recharging the vehicle batteries.

According to a further preferred alternative embodiment of the invention, a fine regulation valve 8 and/or a check valve 12 may be present on the EGR branch 54. Such valve 8, represented for the sake of completeness in the scheme of figure 1, may be optionally provided as an additional regulation element when the engine is used in a mission comprising frequent and rapid transient conditions.

In particular, the counterpressure may be so low that the fine regulation valve 8 and/or the check valve 12 may avoid that the fresh air bypasses the engine E and arrives directly at the exhaust by means of the EGR branch 54.

According to another aspect of the invention, preferred alternative embodiments of the twin-scroll turbine that are also object of the present invention are now described.

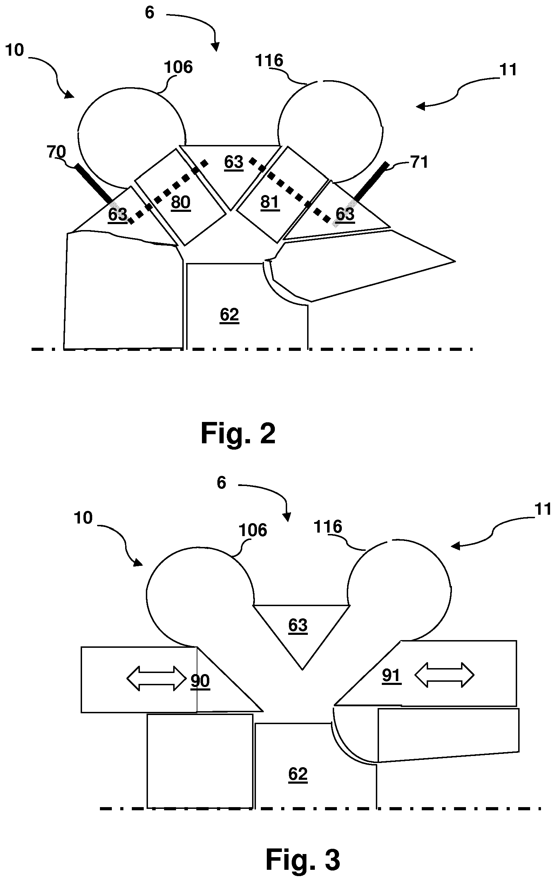

With reference to figure 2, a twin-scroll turbine is shown, both scrolls being of the variable geometry type with swinging vanes.

In the figure, which shows a section according to the axis of the impeller 62, it is possible to observe the scrolls 106 and 116 with their respective swinging vanes 80 and 81 controlled by respective control elements 70 and 71. Such control elements are fully reciprocally independent.

The support rings 63 are suitable to define, together with the vanes themselves, to effusion directions that converge on the impeller.

The movement of the vanes with respect to a respective rotation axis, shown with a dashed line, determines intermediate positions between the full opening and the closing of the vanes. Wherein closing does not mean a full closing, but a smaller effusion section. Such technology is per se known in single-scroll turbines. In twin-scroll turbines it is known to use a single series of swinging vanes so that they intercept the flow leaving both scrolls. This, of course, does not allow to regulate the contribution of the scroll in a reciprocally independent way.

With reference to figure 3, a twin scroll turbine 6 according to the present invention is shown, implementing the so-called sliding sleeve technology on both the scrolls. In other words, each scroll has its own respective means for regulating the internal geometry. The ones being independent of the others. According to such solution, the effusion regulation is realized by means of the sliding elements according to the double head arrows, namely parallel to the impeller axis 62, to fully open or to annular inlet opening of the exhaust gas. Also in this case, the sliding elements can be individually controlled. Also the so-called sliding sleeve technology is per se known in single-scroll turbines. The application of a single sliding sleeve intercepting simultaneously the flow of two scrolls is also known in the art, with the limits described above.

A method for controlling the turbine is now described.

According to a first aspect, at low speed, namely at a speed lower than revolutions per minute at the maximum torque, both distributors of the two scrolls are closed to obtain the maximum progression of the turbo-supercharger 6,2.

Advantageously, such transient condition increases the counterpressure a lot, which facilitates the exhaust gas recirculation. It is exactly in the transient conditions that the emissions increase, thus such counterpressure facilitating the exhaust gas recirculation is particularly advantageous.

At a stationary speed of the turbo-supercharger , on the contrary, the EGR scroll is regulated as a function of the necessary EGR flow rate, while the other scroll 11 is regulated in a way complementary to the scroll 10 in order to provide to the turbine 6 the energy Ecomp necessary to the supercharger.

The method is described with reference to the functional block diagrams of figure 4, wherein each block is intended to correspond to the logic functions performed by the apparatus which realizes them:
- Step 30: calculation of an exhaust gas flow rate to be recirculated and of a boost pressure of the engine (E) ;
- step 31: regulation of the first scroll (10) to realize a counterpressure such that to ensure the recirculation of said exhaust gas flow rate given said boost pressure;
- step 32: calculation of an amount of energy provided by said first scroll (10) to the impeller of the turbine (6),
- step 33: calculation of a remaining amount of energy to be provided to said impeller, as a function of said boost pressure;
- step 34: regulation of the second scroll (11) in order to transfer said remaining amount to the impeller of the turbine (6).

When the quantity of EGR to be recirculated is negligible or equal to zero, the EGR scroll 10 can be regulated in order to be as open/closed as the second scroll 11. If a fine regulation valve 8 is present, such identical regulation can be ensured at any speed. On the contrary, if such fine regulation valve is not present, then the EGR scroll 10 can be regulated to be as open/closed as the second scroll 11 until the counterpressure is such as to induce the exhaust gas recirculation. Once such threshold has been exceeded, further closing regulation are up to the second scroll.

Advantageously, the fact that there is no pumping work when the exhaust gas recirculation is not necessary, according to the tests performed, allows to obtain an improvement of the engine overall performance of at least 3-5%, with an undoubted fuel saving.

The present invention may advantageously be realized by means of a computer program, which comprises program code means performing one or more steps of said method, when said program is run on the control unit of the engine. For this reason the scope of the present patent is meant to cover also said computer program and the computer-readable means that comprise a recorded message, such computer-readable means comprising the program code means for performing one or more steps of such method, when such program is run on the control unit of the engine.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details. The elements and the characteristics described in the different preferred embodiments may be combined without departing from the scope of the present application as defined by the following claims.

## Claims

1. Ground vehicle comprising a supercharged internal combustion engine equipped with after treatment system (ATS) and an exhaust gas recirculation system, the engine (E) comprising
- an intake manifold (4),
- exhaust manifolds (5, 5'), at least one (5) of said exhaust manifolds being connected to the intake manifold (4) to recirculate an exhaust gas flow rate (EGR) according to predetermined operating conditions (rpm, T) of the engine (E),
- means of injection, in the ATS, of an aqueous additive for reducing pollutant emissions,
- control unit configured to control continuously said exhaust gas recirculation and said aqueous additive injection, maximizing a distance to be covered based on residual quantities of the fuel and of the additive;
**characterized in that** said control unit is configured, in case of maximum power required to the engine, to regulate said aqueous additive injection at a maximum saturation level, and also to regulate said exhaust gas recirculation as a function of an advance value of the fuel injection time in cylinders of the internal combustion engine.

2. Vehicle according to claim 1, wherein said control unit is configured to carried out said maximization when residual quantity of fuel and/or the residual quantity of additive are below a predetermined percentage, instead of minimizing a cost function based on the unit costs of the additive and of the fuel.

3. Vehicle according to claim 1 or 2, further comprising means for detecting the efficiency of the ATS, and wherein said control unit is configured to control said recirculation and said aqueous additive injection also as a function of the efficiency of said ATS.

4. Vehicle according to claim 1, wherein said regulation of said exhaust gas recirculation is directly proportional to said advance of the fuel injection time in the cylinders.

5. Vehicle according to one of the previous claims, further comprising
- means for acquiring new unit price values of said fuel and of said aqueous additive, and/or
- means to detect residual quantities of fuel and of aqueous additive,
and means to update the calculation of said cost function, according to said new values.

6. Vehicle according to claim 5, further comprising means for detecting a filling procedure of the fuel and of the aqueous additive tank, said detection means being suitable to activate said acquisition means of said new unit price values, when a filling procedure is detected.

7. Vehicle according to any one of the previous claims, further comprising a twin-scroll (10,11) turbine (6), wherein a first scroll (10) has a respective inlet connected with said at least a first exhaust manifold (5) and a second scroll (11) has a respective inlet connected with said second exhaust manifold (5') and wherein the exhaust manifolds are separate from each other.

8. Vehicle according to claim 7, wherein said first scroll (10) and said second scroll (11) have respective effusion static sections that are equal to each other and that can be regulated independently of one another.

9. Vehicle according to one of the claims 7 or 8, wherein said scrolls are constructively identical to each other.

10. Vehicle according to one of the previous claims, further comprising means for controlling the geometry of the scrolls (10, 11) configured to
- regulate (i) the first scroll (10) as a function of a mass of exhaust gas to be recirculated (EGR),
- regulate (ii) the second scroll (11) as a function of the overall energy (Ecomp) to be provided to the turbine (6).

11. Vehicle according to claim 10, wherein said regulation is realized in stationary conditions of a turbo-supercharger assembly (6,2) comprising said turbine (6) and a supercharger (2) for supercharging the engine (E) driven by the turbine (2).

12. Vehicle according to one of the previous claims 10 or 11, wherein said regulations (i, ii) are realized in order to avoid the turbo-supercharger (6, 2) or the turbogenerator to reach a runaway speed rate.

13. Vehicle according to claim 10, wherein the turbine drives an electric generator and said overall energy is a function of an energy to be transferred to the electric generator.

14. Vehicle according to one of the previous claims, wherein said connection between said first exhaust manifold (5) and said intake manifold (4) comprises:
- a fine regulation valve of the EGR (8) and/or
- a check valve (12) and/or
- an EGR cooler (9).

15. Exhaust gas recirculation method in an ground vehicle including an engine (E) supercharged by an turbine-supercharger assembly (6,2) and equipped with ATS and with injection means of an aqueous additive for reducing pollutant emissions; the method comprising the step of controlling said exhaust gas recirculation and said aqueous additive injection to maximize a distance to be covered based on residual quantities of the fuel and of the additive **characterized in** the step of, in case of maximum power required to the engine, to regulate said aqueous additive injection at a maximum saturation level, and also to regulate said exhaust gas recirculation as a function of an advance value of the fuel injection time in cylinders of said internal combustion engine.

16. Method according to claim 15, wherein said ATS comprises detection means of an efficiency of the ATS, and wherein said cost function is also a function of the efficiency of said ATS.

17. Method according to one of the previous claims 15 or 16, wherein, in case of maximum power required to the engine, said aqueous additive injection is regulated at a maximum saturation level, and said exhaust gas recirculation is regulated as a function of an advance value of the fuel injection time in the engine.

18. Method according to claim 17, wherein said exhaust gas recirculation is directly proportional to said advance of the fuel injection time.

19. Method according to one of the previous claims 15 - 18, further comprising a preliminary step of acquisition of new unit price values of said fuel and of said aqueous additive, and means for updating the calculation of said cost function, according to said new values.

20. Method according to one of the previous claims from 15 to 19, further comprising the step of arranging a twin-scroll (10, 11) turbine (6) so that both scrolls (10, 11) have a variable geometry, one scroll (10) having means for regulating the geometry that are independent of the means for regulating the geometry of the other scroll (11).

21. Method according to claim 20, comprising the step of dimensioning a corresponding effusion static section of the first scroll (10), cooperating in the exhaust gas recirculation, as if the engine (E) was not provided with EGR.

22. Method according to claims 20 or 21, comprising the step of dimensioning effusion static sections of the scrolls (10, 11) in a way equal to each other.

23. Computer program comprising program code means adapted to perform all the steps of the claims from 15 to 19, when such program is run on the control unit of claim 1.

24. Computer-readable means comprising a recorded program, said computer-readable means comprising program code means adapted to perform all the steps according to the one of the claims from 15 to 19, when said program is run on the control unit of claim 1.

## Patentansprüche

1. Bodenfahrzeug, das eine aufgeladene Brennkraftmaschine umfasst, die mit einem Nachbehandlungssystem (ATS) und einem Abgasrückführungssystem ausgestattet ist, wobei die Kraftmaschine (E) Folgendes umfasst:
- einen Einlasskrümmer (4)
- mindestens einen Auslasskrümmer (5, 5'), wobei mindestens einer (5) der Auslasskrümmer mit dem Einlasskrümmer (4) verbunden sind, um eine Abgasdurchflussmenge (AGR) gemäß vorbestimmten Betriebsbedingungen (min⁻¹, T) der Kraftmaschine (E) zurückzuführen,
- Mittel zur Einspritzung von wässrigem Additiv zum Reduzieren von Schadstoffemissionen in dem ATS,
- eine Steuereinheit, die dazu ausgelegt ist, die Abgasrückführung und die Einspritzung von wässrigem Additiv fortlaufend zu steuern, wobei eine zurückzulegende Strecke basierend auf Restmengen an Kraftstoff und an Additiv maximiert wird;
**dadurch gekennzeichnet, dass** die Steuereinheit dazu ausgelegt ist, in einem Fall, in dem maximale Leistung für die Kraftmaschine erforderlich ist, die Einspritzung von wässrigem Additiv auf einem maximalen Sättigungsniveau zu regulieren und zudem die Abgasrückführung als Funktion eines Voreilwerts der Kraftstoffeinspritzzeit in Zylindern der Brennkraftmaschine zu regulieren.

2. Fahrzeug nach Anspruch 1, wobei die Steuereinheit dazu ausgelegt ist, die Maximierung dann, wenn die Restmenge an Kraftstoff und/oder die Restmenge an Additiv unter einem vorbestimmten Prozentsatz liegen, anstatt einer Minimierung einer Kostenfunktion basierend auf den Einheitskosten des Additivs und des Kraftstoffs durchzuführen.

3. Fahrzeug nach Anspruch 1 oder 2, das ferner Mittel zum Detektieren der Effizienz des ATS umfasst, wobei die Steuereinheit dazu ausgelegt ist, die Rückführung und die Einspritzung von wässrigem Additiv zudem als Funktion der Effizienz des ATS zu steuern.

4. Fahrzeug nach Anspruch 1, wobei die Regelung der Abgasrückführung direkt proportional zu dem Voreilen der Kraftstoffeinspritzzeit in den Zylindern ist.

5. Fahrzeug nach einem der vorhergehenden Ansprüche, das ferner umfasst:
- Mittel zum Erfassen neuer Einheitspreiswerte des Kraftstoffs und des wässrigen Additivs und/oder
- Mittel zum Detektieren von Restmengen an Kraftstoff und wässrigem Additiv, und
- Mittel zum Aktualisieren der Berechnung der Kostenfunktion gemäß den neuen Werten.

6. Fahrzeug nach Anspruch 5, das ferner Mittel zum Detektieren eines Füllvorgangs für den Kraftstofftank und den Tank des wässrigen Additivs umfasst, wobei die Mittel zum Detektieren geeignet sind, die Mittel zum Erfassen der neuen Einheitspreiswerte zu aktivieren, wenn ein Füllvorgang detektiert wird.

7. Fahrzeug nach einem der vorhergehenden Ansprüche, das ferner eine Turbine (6) mit Zwillingsspiralen (10, 11) (Twin-Scroll-Turbine) umfasst, wobei eine erste Spirale (10) einen jeweiligen Einlass aufweist, der mit dem mindestens einen ersten Auslasskrümmer (5) verbunden ist, und eine zweite Spirale (11) einen jeweiligen Einlass aufweist, der mit dem zweiten Auslasskrümmer (5') verbunden ist, wobei die Auslasskrümmer voneinander getrennt sind.

8. Fahrzeug nach Anspruch 7, wobei die erste Spirale (10) und die zweite Spirale (11) jeweilige statische Effusionsabschnitte aufweisen, die einander gleichen und die unabhängig voneinander geregelt werden können.

9. Fahrzeug nach einem der Ansprüche 7 oder 8, wobei die Spiralen konstruktionstechnisch miteinander identisch sind.

10. Fahrzeug nach einem der vorhergehenden Ansprüche, das ferner Mittel zum Steuern der Geometrie der Spiralen (10, 11) umfasst, die zu Folgendem ausgelegt sind:
- Regulieren (i) der ersten Spirale (10) als Funktion einer rückzuführenden Abgasmasse (AGR),
- Regulieren (ii) der zweiten Spirale (11) als Funktion einer an die Turbine (6) zu liefernden Gesamtenergie (Ecomp).

11. Fahrzeug nach Anspruch 10, wobei die Regelung unter stationären Bedingungen einer Turbinen-Lader-Anordnung (6, 2), die die Turbine (6) und einen von der Turbine angetriebenen Lader (2) zum Aufladen der Kraftmaschine (E) umfasst, realisiert wird.

12. Fahrzeug nach einem der vorhergehenden Ansprüche 10 oder 11, wobei die Regelungen (i, ii) realisiert werden, um zu vermeiden, dass der Turbolader (6, 2) oder der Turbogenerator eine Durchgangsdrehzahl erreicht.

13. Fahrzeug nach Anspruch 10, wobei die Turbine einen elektrischen Generator antreibt und die Gesamtenergie eine Funktion einer auf den elektrischen Generator zu übertragenden Energie ist.

14. Fahrzeug nach einem der vorhergehenden Ansprüche, wobei die Verbindung zwischen dem ersten Auslasskrümmer (5) und dem Einlasskrümmer (4) Folgendes umfasst:
- ein Feinregulierungsventil der AGR (8) und/oder
- ein Rückschlagventil (12) und/oder
- einen AGR-Kühler (9).

15. Abgasrückführungsverfahren in einem Bodenfahrzeug mit einer Kraftmaschine (E), die von einer Turbinen-Lader-Anordnung (6, 2) aufgeladen und mit einem ATS und Einspritzmitteln für ein wässriges Additiv zum Reduzieren der Schadstoffemissionen ausgestattet ist; wobei das Verfahren den Schritt des Steuerns der Abgasrückführung und der Einspritzung von wässrigem Additiv zum Maximieren einer zurückzulegenden Strecke auf der Basis von Restmengen an Kraftstoff und an Additiv umfasst, **gekennzeichnet durch** den Schritt des Regulierens der Einspritzung von wässrigem Additiv auf einem maximalen Sättigungsniveau in dem Fall, in dem maximale Leistung für die Kraftmaschine erforderlich ist, und zudem des Regulierens der Abgasrückführung als Funktion von einem Voreilwert der Kraftstoffeinspritzzeit in Zylindern der Brennkraftmaschine.

16. Verfahren nach Anspruch 15, wobei das ATS ein Mittel zum Detektieren einer Effizienz des ATS umfasst und wobei die Kostenfunktion auch eine Funktion der Effizienz des ATS ist.

17. Verfahren nach einem der vorhergehenden Ansprüche 15 oder 16, wobei in dem Fall, in dem maximale Leistung für die Kraftmaschine erforderlich ist, die Einspritzung von wässrigem Additiv auf einem maximalen Sättigungsniveau geregelt wird und die Abgasrückführung als Funktion von einem Voreilwert der Kraftstoffeinspritzzeit in der Kraftmaschine geregelt wird.

18. Verfahren nach Anspruch 17, wobei die Abgasrückführung direkt proportional zu dem Voreilen der Kraftstoffeinspritzzeit ist.

19. Verfahren nach einem der vorhergehenden Ansprüche 15 bis 18, das ferner einen vorausgehenden Schritt des Erfassens neuer Einheitspreiswerte des Kraftstoffs und des wässrigen Additivs und Mittel zum Aktualisieren der Berechnung der Kostenfunktion gemäß den neuen Werten umfasst.

20. Verfahren nach einem der vorhergehenden Ansprüche 15 bis 19, das ferner den Schritt des Anordnens einer Turbine (6) mit Zwillingsspiralen (10, 11) (Twin-Scroll-Turbine) so, dass beide Spiralen (10, 11) eine variable Geometrie aufweisen, umfasst, wobei eine Spirale (10) Mittel zum Regulieren der Geometrie aufweist, die von den Mitteln zum Regulieren der Geometrie der anderen Spirale (11) unabhängig sind.

21. Verfahren nach Anspruch 20, das den Schritt des Dimensionierens eines entsprechenden statischen Effusionsabschnitts der ersten Spirale (10), die bei der Abgasrückführung mitwirkt, so, als ob die Kraftmaschine (E) nicht mit AGR versehen wäre, umfasst.

22. Verfahren nach Anspruch 20 oder 21, das den Schritt des Dimensionierens von statischen Effusionsabschnitten der Spiralen (10, 11) auf einander gleiche Weise umfasst.

23. Computerprogramm, das Programmcodemittel umfasst, die dazu ausgelegt sind, alle Schritte der Ansprüche 15 bis 19 auszuführen, wenn ein solches Programm auf der Steuereinheit nach Anspruch 1 ausgeführt wird.

24. Computerlesbare Mittel, die ein aufgezeichnetes Programm umfassen, wobei die computerlesbaren Mittel Programmcodemittel umfassen, die dazu ausgelegt sind, alle Schritte nach einem der Ansprüche 15 bis 19 auszuführen, wenn das Programm auf der Steuereinheit nach Anspruch 1 ausgeführt wird.

## Revendications

1. Véhicule terrestre comprenant un moteur à combustion interne suralimenté équipé d'un système de post-traitement (ATS) et d'un système de recirculation des gaz d'échappement, le moteur à combustion interne (E) comprenant :
- un collecteur d'admission (4),
- des collecteurs d'échappement (5, 5'), au moins l'un (5) desdits collecteurs d'échappement étant relié au collecteur d'admission (4) pour faire recirculer un débit de gaz d'échappement (EGR) conformément à des conditions de fonctionnement prédéterminées (rpm, T) du moteur (E),
- des moyens d'injection, dans l'ATS, d'un additif aqueux pour réduire les émissions de polluants,
- une unité de commande configurée pour commander continûment ladite recirculation des gaz d'échappement et ladite injection d'additif aqueux, augmentant à un maximum une distance à couvrir sur la base des quantités résiduelles du carburant et de l'additif ;
**caractérisé en ce que** ladite unité de commande est configurée, dans le cas où la puissance maximum est requise pour le moteur à combustion interne, pour réguler ladite injection d'additif aqueux à un niveau de saturation maximum, et également pour réguler ladite recirculation des gaz d'échappement en fonction d'une valeur d'avance de l'instant d'injection de carburant dans les cylindres du moteur à combustion interne.

2. Véhicule selon la revendication 1, dans lequel ladite unité de commande est configurée pour effectuer ladite augmentation à un maximum lorsque la quantité résiduelle de carburant et/ou la quantité résiduelle d'additif sont au-dessous d'un pourcentage prédéterminé, au lieu de réduire à un minimum une fonction de coût sur la base des coûts unitaires de l'additif et du carburant.

3. Véhicule selon la revendication 1 ou 2, comprenant en outre des moyens pour détecter l'efficacité de l'ATS, et dans lequel ladite unité de commande est configurée pour commander ladite recirculation et ladite injection d'additif aqueux également en fonction de l'efficacité dudit ATS.

4. Véhicule selon la revendication 1, dans lequel ladite régulation de ladite recirculation des gaz d'échappement est directement proportionnelle à ladite avance de l'instant d'injection de carburant dans les cylindres.

5. Véhicule selon l'une des revendications précédentes, comprenant en outre :
- des moyens pour acquérir de nouvelles valeurs de prix unitaires dudit carburant et dudit additif aqueux, et/ou
- des moyens pour détecter les quantités résiduelles de carburant et d'additif aqueux, et
- des moyens pour mettre à jour le calcul de ladite fonction de coût, conformément auxdites nouvelles valeurs.

6. Véhicule selon la revendication 5, comprenant en outre des moyens pour détecter une procédure de remplissage des réservoirs de carburant et d'additif aqueux, lesdits moyens de détection étant appropriés pour activer lesdits moyens d'acquisition desdites nouvelles valeurs de prix unitaires, lorsqu'une procédure de remplissage est détectée.

7. Véhicule selon l'une quelconque des revendications précédentes, comprenant en outre une turbine (6) à deux volutes (10, 11), dans lequel une première volute (10) a une entrée respective reliée audit au moins un premier collecteur d'échappement (5) et une deuxième volute (11) a une entrée respective reliée audit deuxième collecteur d'échappement (5') et dans lequel les collecteurs d'échappement sont séparés l'un de l'autre.

8. Véhicule selon la revendication 7, dans lequel ladite première volute (10) et ladite deuxième volute (11) ont des sections statiques d'effusion respectives qui sont égales l'une à l'autre et qui peuvent être régulées indépendamment l'une de l'autre.

9. Véhicule selon l'une des revendications 7 ou 8, dans lequel lesdites volutes sont identiques l'une à l'autre quant à leur construction.

10. Véhicule selon l'une des revendications précédentes, comprenant en outre des moyens pour commander la géométrie des volutes (10, 11) configurées pour
- réguler (i) la première volute (10) en fonction d'une masse de gaz d'échappement à faire recirculer (EGR),
- réguler (ii) la deuxième volute (11) en fonction de l'énergie globale (Ecomp) à fournir à la turbine (6).

11. Véhicule selon la revendication 10, dans lequel ladite régulation est réalisée dans des conditions stationnaires d'un ensemble de turbocompresseur (6, 2) comprenant ladite turbine (6) et un compresseur volumétrique (2) pour suralimenter le moteur à combustion interne (E) entraîné par la turbine (2).

12. Véhicule selon l'une des revendications 10 ou 11 précédentes, dans lequel lesdites régulations (i, ii) sont réalisées afin d'éviter que le turbocompresseur (6, 2) ou la turbogénératrice n'atteigne une vitesse d'emballement.

13. Véhicule selon la revendication 10, dans lequel la turbine entraîne une génératrice électrique et ladite énergie globale est fonction d'une énergie à transférer à la génératrice électrique.

14. Véhicule selon l'une des revendications précédentes, dans lequel ladite liaison entre ledit premier collecteur d'échappement (5) et ledit collecteur d'admission (4) comprend :
- une vanne de régulation fine de l'EGR (8), et/ou
- un clapet anti-retour (12), et/ou
- un dispositif de refroidissement d'EGR (9).

15. Procédé de recirculation des gaz d'échappement dans un véhicule terrestre comprenant un moteur à combustion interne (E) suralimenté par un ensemble turbine-compresseur volumétrique (6, 2) et équipé d'un ATS et de moyens d'injection d'un additif aqueux pour réduire les émissions de polluants ; le procédé comprenant l'étape de commande de ladite recirculation des gaz d'échappement et de ladite injection d'additif aqueux pour augmenter à un maximum une distance à couvrir sur la base des quantités résiduelles du carburant et de l'additif, **caractérisé par**
l'étape, dans le cas où la puissance maximum est requise pour le moteur à combustion interne, pour réguler ladite injection d'additif aqueux à un niveau de saturation maximum, et également pour réguler ladite recirculation des gaz d'échappement en fonction d'une valeur d'avance de l'instant d'injection de carburant dans les cylindres dudit moteur à combustion interne.

16. Procédé selon la revendication 15, dans lequel ledit ATS comprend des moyens de détection de l'efficacité de l'ATS, et dans lequel ladite fonction de coût est également fonction de l'efficacité dudit ATS.

17. Procédé selon l'une des revendications 15 ou 16 précédentes, dans lequel, dans le cas où la puissance maximum est requise pour le moteur à combustion interne, ladite injection d'additif aqueux est régulée à un niveau de saturation maximum, et ladite recirculation des gaz d'échappement est régulée en fonction d'une valeur d'avance de l'instant d'injection de carburant dans le moteur à combustion interne.

18. Procédé selon la revendication 17, dans lequel ladite recirculation des gaz d'échappement est directement proportionnelle à ladite avance de l'instant d'injection de carburant.

19. Procédé selon l'une des revendications 15 à 18 précédentes, comprenant en outre une étape préliminaire d'acquisition de nouvelles valeurs de prix unitaires dudit carburant et dudit additif aqueux, et des moyens pour mettre à jour le calcul de ladite fonction de coût, conformément auxdites nouvelles valeurs.

20. Procédé selon l'une des revendications 15 à 19 précédentes, comprenant en outre l'étape d'agencement d'une turbine (6) à deux volutes (10, 11) de sorte que les deux volutes (10, 11) aient une géométrie variable, une volute (10) ayant des moyens pour réguler la géométrie qui sont indépendants des moyens pour réguler la géométrie de l'autre volute (11).

21. Procédé selon la revendication 20, comprenant l'étape de dimensionnement d'une section statique d'effusion correspondante de la première volute (10), coopérant dans la recirculation des gaz d'échappement, comme si le moteur à combustion interne (E) n'était pas pourvu d'EGR.

22. Procédé selon la revendication 20 ou 21, comprenant l'étape de dimensionnement des sections statiques d'effusion des volutes (10, 11) d'une manière égales l'une à l'autre.

23. Programme d'ordinateur comprenant des moyens formant code de programme conçus pour effectuer toutes les étapes des revendications 15 à 19, lorsque ce programme est exécuté sur l'unité de commande de la revendication 1.

24. Moyens pouvant être lus par un ordinateur comprenant un programme enregistré, lesdits moyens pouvant être lus par un ordinateur comprenant des moyens formant code de programme conçus pour effectuer toutes les étapes conformément à ladite une des revendications 15 à 19, lorsque ledit programme est exécuté sur l'unité de commande de la revendication 1.
